# FASCICULE DE BREVET EUROPEEN

(11) **EP 1 098 797 B1**
(45) Date de publication et mention de la délivrance du brevet: **27.10.2004**
(21) Numéro de dépôt: 99929492.9
(22) Date de dépôt: 16.07.1999
(51) Int. Cl.: B60S 1/40

(54) **ESSUIE-GLACE DE VEHICULE AUTOMOBILE COMPORTANT UN VERROU PIVOTANT**
KRAFTFAHRZEUGSCHEIBENWISCHER MIT SCHWENKBAREM RIEGEL
MOTOR VEHICLE WIPER COMPRISING A PIVOTING LOCK

(30) Priorité: 20.07.1998 FR 9809254
(43) Date de publication de la demande: 16.05.2001
(73) Titulaire: Valeo Systèmes d'Essuyage, 78321 La Verrière (FR)
(72) Inventeur: JOURNEE, Maurice, F-60240 Reilly (FR); JEHANNET, Jean-Pierre, F-27200 Vernon (FR)
(74) Mandataire: Lemaire, Marc
(86) Numéro de dépôt international: PCT/FR1999/001738
(87) Numéro de publication internationale: WO 2000/005113

(56) Documents cités:
- EP-A- 0 459 867
- EP-A- 0 606 846
- FR-A- 2 080 409

## Description

L'invention concerne un essuie-glace de véhicule automobile comportant un verrou pivotant.

L'invention se rapporte plus particulièrement à un essuie-glace de véhicule automobile, dans lequel un balai d'essuie-glace est articulé à une extrémité longitudinale d'un bras d'essuie-glace par l'intermédiaire d'un connecteur qui est articulé sur le bras et qui est fixé sur une portion de liaison du balai, la portion de liaison comportant un élément transversal, l'essuie-glace comportant un verrou mobile porté par le connecteur, le verrou étant articulé sur le connecteur entre une position de verrouillage et une position de déverrouillage, le verrou mobile étant destiné à coopérer avec l'élément transversal par l'intermédiaire d'un moyen d'accrochage, destiné à s'engager avec l'élément transversal en position de verrouillage.

Le document EP-A-0.606.846 au nom de la demanderesse décrit un essuie-glace de véhicule qui comporte un dispositif de liaison pour un essuie-glace comportant un connecteur pour le raccordement de l'extrémité libre d'un bras d'essuie-glace et auquel est fixé, de manière démontable, un élément de structure d'un balai d'essuie-glace. Un organe de verrouillage est monté coulissant par rapport au connecteur. Le connecteur comporte un axe d'articulation du bras. Une tige transversale portée par l'élément de la structure du balai d'essuie-glace coopère avec l'organe de verrouillage de manière à immobiliser longitudinalement l'élément par rapport au connecteur. L'organe de verrouillage comporte une pince déformable élastiquement en forme d'épingle à cheveux qui est ouverte à l'une des extrémités longitudinales de l'organe de verrouillage pour recevoir un tronçon de la tige en position de verrouillage.

L'invention a pour but de proposer un essuie-glace selon la préambule de la revendication 1, dans lequel le maniement du verrou du connecteur est particulièrement simple et ne requiert que peu d'efforts.

De plus, l'invention a pour but de proposer une nouvelle conception du verrou qui permettent à un utilisateur de voir au premier coup d'oeil dans quelle position de verrouillage ou de déverrouillage se trouve le verrou.

Dans ce but, l'invention propose un essuie-glace de véhicule automobile, dans lequel un balai d'essuie-glace est articulé à une extrémité longitudinale d'un bras d'essuie-glace par l'intermédiaire d'un connecteur qui est articulé sur le bras et qui est fixé sur une portion de liaison du balai, la portion de liaison comportant un élément transversal, l'essuie-glace comportant un verrou mobile porté par le connecteur, le verrou étant monté mobile sur le connecteur entre une position de verrouillage et une position de déverrouillage, le verrou mobile étant destiné à coopérer avec l'élément transversal par l'intermédiaire d'un moyen d'accrochage destiné à s'engager avec l'élément transversal en position de verrouillage, caractérisé en ce que le passage d'une position à l'autre est obtenue par pivotement du verrou mobile autour de son axe d'articulation (A2) sur le connecteur.

Selon divers modes de réalisation de l'invention :
- le verrou est articulé sur le connecteur autour d'un axe transversal ;
- le connecteur est en appui vers le bas sur la portion de liaison du balai, et le verrou coopère avec une face inférieure de l'élément transversal ;
- le verrou comporte une patte d'accrochage qui est reçue entre les ailes du balai, qui, en position de verrouillage, coopère avec l'élément transversal et qui, en position de déverrouillage, est dégagée longitudinalement par rapport à l'élément transversal ;
- l'élément transversal est formé par un élément de plaque qui s'étend entre les deux ailes et qui est muni d'une fente longitudinale qui débouche dans un bord transversal avant de l'élément de plaque ; en position de déverrouillage du verrou, la patte d'accrochage s'étend en regard de la fente, et, en position de verrouillage, la patte d'accrochage coopère en appui contre une face de butée de l'élément de plaque qui est agencée longitudinalement en arrière de la fente ;
- le verrou comporte des moyens de butée qui déterminent ses positions de verrouillage et de déverrouillage par rapport au connecteur;
- le verrou comporte des moyens élastiques qui le forcent vers l'une ou l'autre de ses positions de verrouillage et de déverrouillage ;
- le verrou comporte une patte élastique qui s'étend sensiblement en arc de cercle autour de l'axe d'articulation du verrou et qui comporte une surface de came qui, lorsque le verrou est entre ses positions de verrouillage et de déverrouillage, coopère avec une surface fixe du connecteur pour déformer élastiquement la patte ;
- le verrou comporte une plaque de manipulation qui s'étend perpendiculairement à l'axe d'articulation du verrou ;
- la plaque de manipulation comporte, à une extrémité libre, des moyens d'emboîtement élastiques qui coopèrent avec des moyens complémentaires du connecteur pour maintenir le verrou en position de verrouillage ; et
- le verrou comporte une partie qui, lorsque le verrou arrive en position de déverrouillage, coopère avec le balai de manière à provoquer un détachement du connecteur par rapport au balai.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective éclatée d'un essuie-glace conforme aux enseignements de l'invention ;
- les figures 2 et 3 sont des vues en coupe longitudinale de l'essuie-glace de la figure 1, le verrou étant représenté respectivement en position de déverrouillage et en position de verrouillage ; et
- la figure 4 est une vue en perspective éclatée d'un second mode de réalisation de l'invention ; et
- les figures 5 et 6 sont des vues similaires respectivement aux figures 2 et 3 illustrant le second mode de réalisation de l'invention.

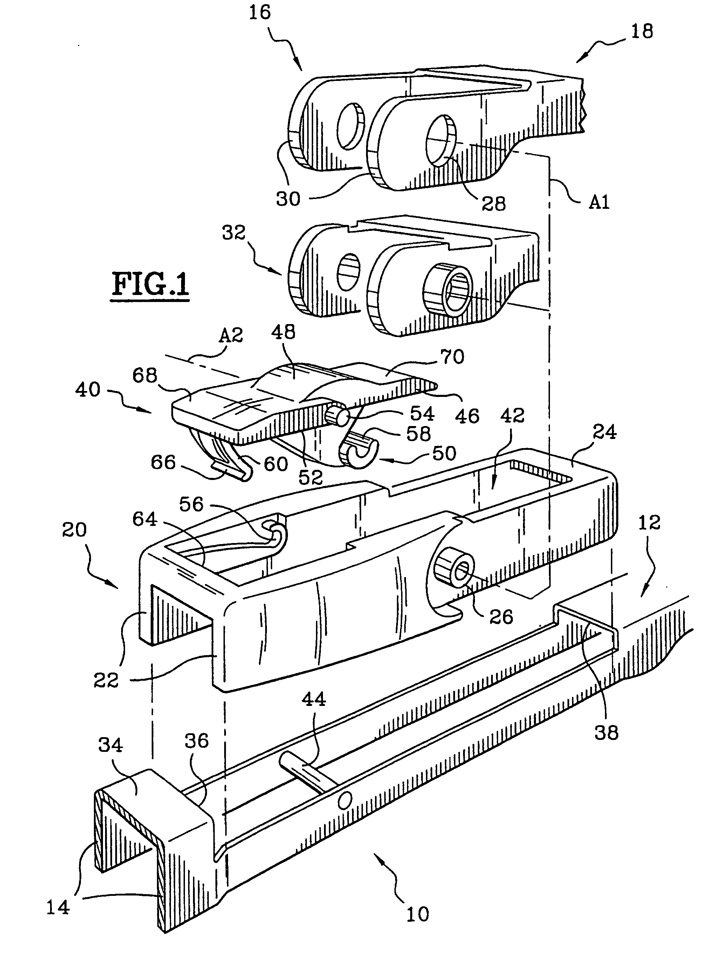

On a représenté sur la figure 1 la portion de liaison 10 d'un balai d'essuie-glace 12 de véhicule automobile. La portion de liaison 10 est par exemple formée par la portion centrale d'un étrier principal du balai 12. La portion de liaison 10 comporte pour l'essentiel deux ailes longitudinales parallèles 14 qui s'étendent selon la direction longitudinale du balai 12.

Le balai 12 est destiné à être monté à l'extrémité longitudinale libre 16 d'un bras d'essuie-glace 18 qui a pour fonction d'une part de plaquer le balai 12 contre une vitre à essuyer et d'autre part d'entraîner le balai en balayage alterné afin que celui-ci se déplace le long de la vitre.

Le balai 12 est destiné à être articulé sur le bras 18 par l'intermédiaire d'un connecteur 20 qui est monté articulé à rotation autour d'un axe transversal A1 sur le bras 18 et qui est fixé sur la portion de liaison 10 du balai 12.

Le connecteur 20 est généralement réalisé en matière plastique et il comporte pour l'essentiel deux flasques latéraux 22 réunis par un dos supérieur transversal 24. En coupe transversale, le connecteur 20 présente ainsi une forme de U renversé et le connecteur 20 est destiné à chevaucher la portion de liaison 10 du balai 12, les deux ailes 14 de cette dernière étant reçues entre les deux flasques 22 du connecteur 20.

Les flasques 22 du connecteur 20 comportent chacun un tourillon cylindrique 26 qui s'étend transversalement vers l'extérieur, chaque tourillon étant reçu dans un orifice 28 aménagé dans une de deux joues 30 de l'extrémité libre 16 du bras 18. Les deux joues 30 s'étendent longitudinalement parallèlement l'une à l'autre de manière à former une chape, les flasques 22 du connecteur 20 étant reçus transversalement entre les deux joues 30.

Les tourillons 26 assurent donc le montage à rotation du connecteur 20 par rapport au bras 18.

Dans l'exemple de réalisation illustré sur la figure 1, une pièce intermédiaire 32 est interposée entre le connecteur 20 et l'extrémité libre 16 du bras 18 pour à la fois limiter les jeux de fonctionnement et réduire l'usure et le bruit pouvant résulter du mouvement relatif du connecteur 20 par rapport au bras 18.

Conformément aux enseignements de l'invention, le connecteur 20 comporte des moyens qui assurent sa fixation de manière rigide sur la portion de liaison 10 du balai 12.

Comme on peut le voir sur la figure 1, l'étrier du balai 12 présente un dos supérieur transversal 34 qui relie les ailes 14 en dehors de la portion de liaison 10, laquelle est donc délimitée longitudinalement par deux bords transversaux 36, 38 du dos 34.

Le connecteur 20, qui chevauche la portion de liaison 10, est immobilisé longitudinalement dans les deux sens par rapport au balai 12 en venant en appui longitudinalement contre chacun des deux bords transversaux 36, 38.

Pour assurer l'immobilisation totale du connecteur 20, il suffit donc d'empêcher tout mouvement de retrait vertical vers le haut du connecteur 20 par rapport à la portion de liaison 10.

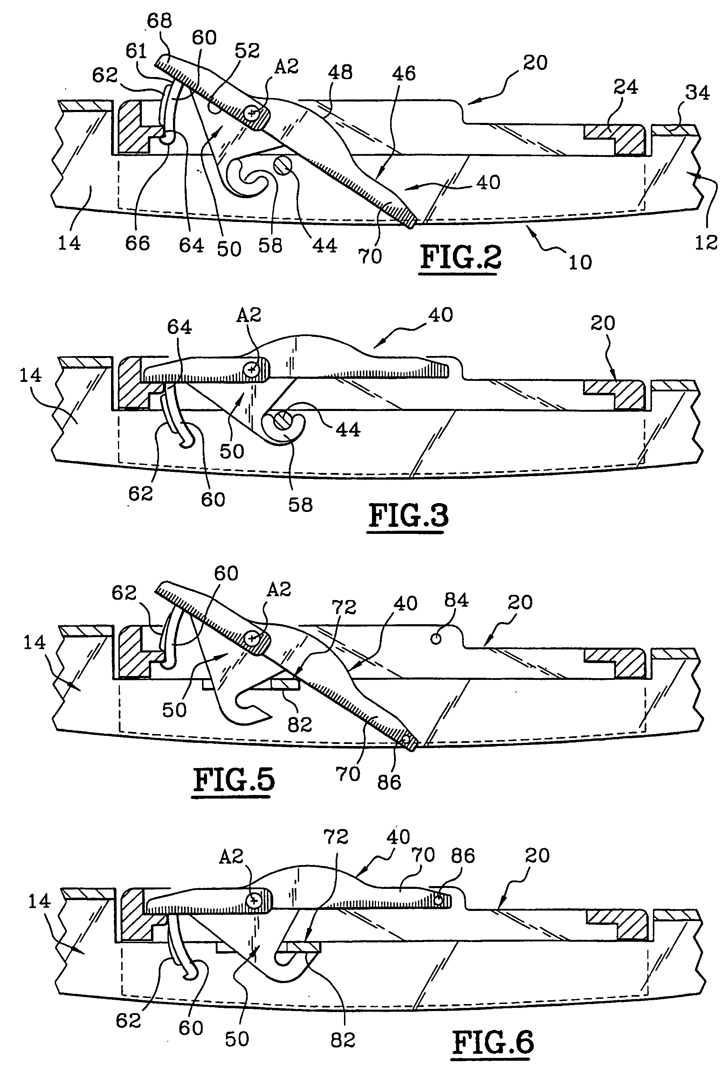

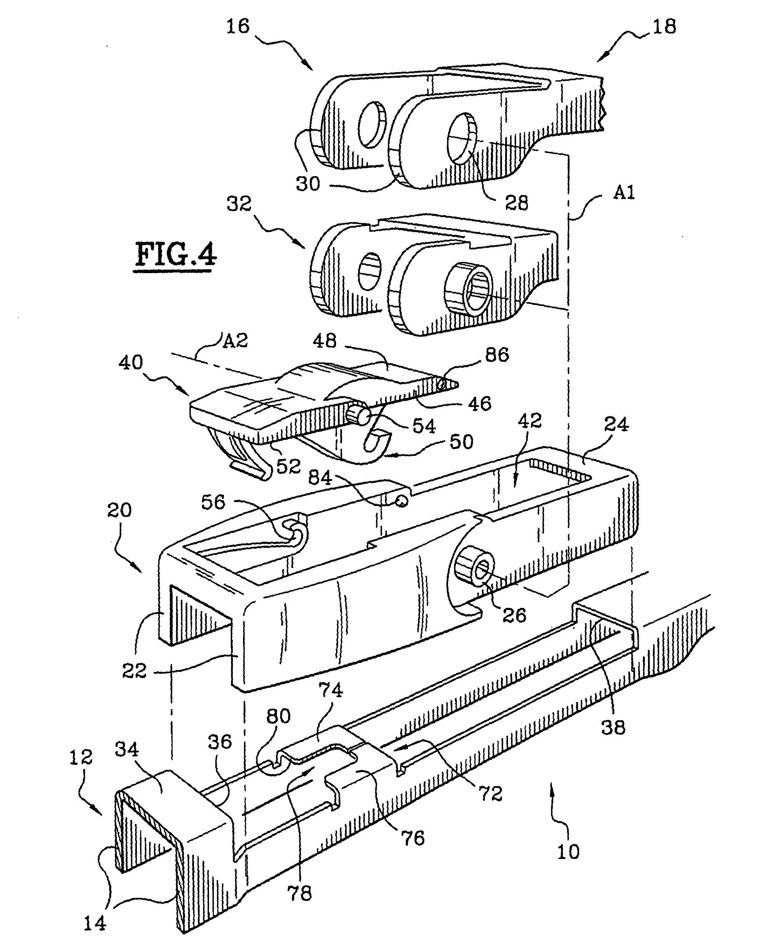

Pour ce faire, et conformément aux enseignements de l'invention, le connecteur 20 comporte un verrou 40 qui est monté pivotant autour d'un axe transversal A2, parallèle à l'axe transversal A1 de pivotement du connecteur 20 par rapport au bras 18, entre une position de déverrouillage illustrée à la figure 2 et une position de verrouillage illustrée à la figure 3.

Le verrou 40 est destiné à coopérer avec une tige transversale 44 qui relie les deux ailes 14 de la portion de liaison 10 du balai.

Le verrou 40 est reçu dans une lumière 42 aménagée dans le dos supérieur 24 du connecteur 20.

Comme on peut le voir par exemple sur la figure 1, le verrou 40 comporte pour l'essentiel une plaque supérieure 46 qui, lorsque le verrou est en position de verrouillage, s'étend sensiblement dans le plan du dos supérieur 24 du connecteur 20.

La face supérieure 48 de la plaque de manipulation 46 est alors accessible depuis l'extérieur du montage tandis qu'une patte d'accrochage 50, qui s'étend depuis une face inférieure 52 de la plaque supérieure 46, est reçue entre les deux flasques 22 du connecteur 20 et entre les deux ailes 14 de la portion de liaison 10 du balai 12.

Pour son articulation autour de l'axe A2, le verrou 40 comporte deux pions 54 qui s'étendent transversalement vers l'extérieur depuis des bords longitudinaux de la plaque 40 pour être reçus dans des logements complémentaires 56 aménagés dans des faces internes des flasques 22 du connecteur 20. Comme on peut le voir sur la figure 1, les pions 54 du verrou 40 sont reçus dans les logements 56 par emboîtement élastique en insérant le verrou 40 à l'intérieur de la lumière 42, sensiblement du haut vers le bas et légèrement d'avant en arrière selon la direction longitudinale.

Comme on peut le voir sur les figures 1 à 3, la patte d'accrochage 50, qui est agencée en dessous de la plaque supérieure 46, et donc en dessous de l'axe A2 d'articulation du verrou 40 sur le connecteur 20, porte à son extrémité inférieure une gouttière 58 qui présente la forme d'un demi-tube cylindrique d'axe transversal. La gouttière 58 est ouverte vers le haut lorsque le verrou 40 est dans sa position de verrouillage illustrée à la figure 3 et la surface cylindrique interne de la gouttière 58 est sensiblement du même diamètre que la tige transversale 44 du balai 12.

Le verrou 40 comporte par ailleurs des moyens qui permettent de l'immobiliser dans l'une ou l'autre de ses positions de verrouillage ou de déverrouillage par rapport au connecteur 20.

Dans ce premier mode de réalisation de l'invention, le verrou comporte une patte élastique 60 qui s'étend sensiblement en arc de cercle autour de l'axe A2, vers le bas depuis une extrémité longitudinale avant de la face inférieure 52 de la plaque de manipulation 46. La patte élastique 60 présente une face avant 61 qui, lorsque le verrou 40 pivote entre ses positions de verrouillage et de déverrouillage, se déplace en regard d'un bord transversal avant 64 de la lumière 42 du connecteur 20.

À son extrémité inférieure libre, la patte élastique 60 présente un bec 66 qui s'étend vers l'avant et qui est destiné à venir en appui contre le bord transversal 64 de la lumière 42 lorsque le verrou 40 atteint sa position de déverrouillage pour former une butée et limiter ainsi la course du verrou 40. La course angulaire du verrou 40 est donc de sensiblement égale à la longueur angulaire de la patte 60 autour de l'axe A1.

La patte élastique 60 présente, sur sa face avant, un bossage 62 qui s'étend autour de l'axe A2 sur un angle inférieur à la longueur angulaire de la patte élastique 60. Ainsi, le bossage 62 s'arrête angulairement avant la face inférieure 52 de la plaque 46 et avant le bec 66 de la patte 60.

Le bossage 62 est prévu de telle manière que, lorsqu'il se trouve en regard du bord transversal 64, il provoque une déformation élastique de la patte 60 en venant en appui contre ce bord 64. De préférence, le bossage 62 n'est pas en arc de cylindre centré sur l'axe A2 de telle sorte que, lorsqu'il est en appui contre le bord 64, il est en position d'équilibre instable et tend à forcer le verrou 40 vers l'une ou l'autre de ses positions de verrouillage ou de déverrouillage.

En position de déverrouillage, la plaque supérieure 46 du verrou 40 est inclinée par rapport au plan du dos supérieur 24 du connecteur 20 de telle manière qu'une partie avant 68 de celle-ci s'élève au-dessus du niveau de ce plan tandis qu'une partie arrière 70 de la plaque s'étend en dessous du plan et est donc reçue entre les flasques 22 du connecteur 20. De la sorte, lorsque que le connecteur 20 est présenté juste au-dessus de la portion de liaison 10 du balai 12, la patte d'accrochage 50 se trouve décalée longitudinalement vers l'avant par rapport à l'élément transversal 44. Ainsi, la gouttière 58 et la tige transversale 44 ne peuvent interférer et il est possible d'engager le connecteur 20 à cheval sur la portion de liaison 10.

En faisant basculer le verrou 40 autour de l'axe A2, de manière à ramener la plaque 46 dans le plan du dos supérieur 24 du connecteur 20, la gouttière 58 de la patte d'accrochage 50 est amenée vers l'arrière juste en dessous de la tige transversale 44.

Comme on peut le voir plus particulièrement sur la figure 3, la surface cylindrique interne de la gouttière 58 est sensiblement du même diamètre que la tige transversale 44 de sorte que, en position de verrouillage du verrou 40, la gouttière 58 vient s'engager autour de la partie inférieure de la face externe de la tige 44.

Ainsi, lorsque le verrou 40 est en position de verrouillage, l'ensemble du connecteur 20 et du verrou 40 ne peut être dégagé verticalement vers le haut par rapport au balai 12 si bien que le bras 18 et le balai 12 sont reliés en rotation l'un à l'autre autour de l'axe A1.

Lorsque l'utilisateur désire séparer le balai 12 du bras 18, il lui faut donc agir sur la face supérieure de la plaque de manipulation 46, par exemple en appuyant vers le bas sur la partie arrière 70 de celle-ci, de manière à dégager la gouttière 58 de la tige transversale 44.

En étant libéré du verrou 40, le balai 12 peut alors être séparé du connecteur 20 qui, lui, reste solidaire du bras 18.

Eventuellement, on peut prévoir que la partie arrière 70 de la plaque de manipulation 46 vienne en appui contre les bords supérieurs longitudinaux des ailes 14 de telle manière que, lorsque l'utilisateur provoque la rotation du verrou 40 vers sa position de déverrouillage, il provoque non seulement le déverrouillage du balai 12 mais également la séparation du balai 12 d'avec le connecteur 20 en repoussant la portion d'articulation 10 du balai 12 vers le bas.

Dans le deuxième exemple de réalisation de l'invention qui est illustré aux figures 4 à 6, les deux ailes 14 de la portion de liaison 10 du balai 12 ne sont pas reliées par une tige transversale, mais par un élément transversal 72 qui est réalisé par continuité de matière avec les ailes 14.

Dans cet exemple de réalisation, l'élément transversal 72 est formé de deux rabats 74, 76 qui s'étendent chacun depuis un bord longitudinal supérieur de chacune des ailes 14 de la portion de liaison 10 et qui sont pliés transversalement en direction de l'aile 14 opposée, chaque rabat 74, 76 s'étendant transversalement sur sensiblement la moitié de la largeur transversale de la portion de liaison 10. L'élément transversal 72 pourrait aussi être réalisé sous la forme d'une plaque continue reliant les deux ailes 14.

L'élément transversal 72 est agencé longitudinalement sensiblement au tiers avant de la portion de liaison 10 et il comporte une fente longitudinale 78 qui s'étend longitudinalement sur environ les trois quarts de sa longueur et qui débouche longitudinalement dans un bord avant 80 de l'élément transversal 72. La fente 78 est agencée symétriquement au centre des deux ailes 14 selon la direction transversale et elle est formée par deux dégagements correspondants aménagés dans chacun des deux rabats 74, 76 qui forment l'élément transversal 72.

Dans ce deuxième mode de réalisation de l'invention, la patte d'accrochage 50 présente une extrémité inférieure en forme de crochet de telle sorte que, comme on peut le voir sur la figure 6, lorsque le verrou 40 est en position de verrouillage, l'extrémité libre du crochet, qui est tournée vers le haut, est en appui contre une face inférieure 82 de l'élément transversal 72. La face inférieure 82 est en réalité répartie sur les deux rabats 74, 76 et elle est agencée longitudinalement en arrière de la fente longitudinale 78, dans une zone arrière de l'élément transversal 72 au niveau de laquelle les deux rabats 74, 76 sont presque au contact l'un de l'autre.

Au contraire, comme on peut le voir sur le la figure 5, lorsque le verrou est en position de déverrouillage, l'extrémité inférieure en forme de crochet de la patte d'accrochage 50 s'étend verticalement en regard de la fente 78 de l'élément transversal 44. La fente 78 et la patte d'accrochage 50 présentent sensiblement la même largeur transversale de sorte que, dans cette position de déverrouillage, le connecteur 20 est libre d'être dégagé ou engagé verticalement par rapport à la portion de liaison 10 du balai 12.

Dans cet exemple de réalisation de l'invention, le verrou 40 est maintenu en position de verrouillage grâce à des plots 84 qui s'étendent transversalement vers l'intérieur depuis les faces internes des flasques 22 du connecteur 20 pour être reçus dans des empreintes 86 correspondantes aménagées à l'extrémité arrière des bords longitudinaux de la partie arrière 70 de la plaque de manipulation 46.

## Revendications

1. Essuie-glace de véhicule automobile, dans lequel un balai d'essuie-glace (12) est articulé à une extrémité longitudinale (16) d'un bras d'essuie-glace (18) par l'intermédiaire d'un connecteur (20) qui est articulé sur le bras (18) et qui est fixé sur une portion de liaison (10) du balai (12), la portion de liaison (10) comportant un élément transversal (44, 72), l'essuie-glace (12) comportant un verrou mobile (40) porté par le connecteur, le verrou étant monté mobile sur le connecteur (40) entre une position de verrouillage et une position de déverrouillage, le verrou mobile (40) étant destiné à coopérer avec l'élément transversal (44, 72) par l'intermédiaire d'un moyen d'accrochage destiné à s'engager avec l'élément transversal en position de verrouillage, **caractérisé en ce que** le passage d'une position à l'autre est obtenue par pivotement du verrou mobile (40) autour de son axe d'articulation (A2) sur le connecteur (20).

2. Essuie-glace selon la revendication 1, **caractérisé en ce que** le verrou (40) est articulé sur le connecteur (20) autour d'un axe transversal (A2).

3. Essuie-glace selon l'une quelconque des revendications précédentes, **caractérisé en ce que** le connecteur (20) est en appui vers le bas sur la portion de liaison (10) du balai (12), et **en ce que** le verrou (40) coopère avec une face inférieure (82) de l'élément transversal (44, 72).

4. Essuie-glace selon l'une quelconque des revendications précédentes, **caractérisé en ce que** le verrou (40) comporte une patte d'accrochage (50) qui est reçue entre les ailes (14) du balai (12), qui, en position de verrouillage, coopère avec l'élément transversal (44, 72) et qui, en position de déverrouillage, est dégagée longitudinalement par rapport à l'élément transversal (44, 72).

5. Essuie-glace selon l'une quelconque des revendications précédentes, **caractérisé en ce que** l'élément transversal est formé par un élément de plaque (72) qui s'étend entre les deux ailes (14) et qui est muni d'une fente longitudinale (78) qui débouche dans un bord transversal avant (80) de l'élément de plaque (72), **en ce que**, en position de déverrouillage du verrou (40), la patte d'accrochage (50) s'étend en regard de la fente (78), et **en ce que**, en position de verrouillage, la patte d'accrochage (50) coopère en appui contre une face de butée (82) de l'élément de plaque (72) qui est agencée longitudinalement en arrière de la fente (78).

6. Essuie-glace selon l'une quelconque des revendications précédentes, **caractérisé en ce que** le verrou (40) comporte des moyens de butée (62, 66) qui déterminent ses positions de verrouillage et de déverrouillage par rapport au connecteur (20).

7. Essuie-glace selon l'une quelconque des revendications précédentes, **caractérisé en ce que** le verrou (40) comporte des moyens élastiques (60, 62) qui le forcent vers l'une ou l'autre de ses positions de verrouillage et de déverrouillage.

8. Essuie-glace selon l'une quelconque des revendications précédentes, **caractérisé en ce que** le verrou (40) comporte une patte élastique (60) qui s'étend sensiblement en arc de cercle autour de l'axe d'articulation (A2) du verrou (40) et qui comporte une surface de came (62) qui, lorsque le verrou (40) est entre ses positions de verrouillage et de déverrouillage, coopère avec une surface fixe (64) du connecteur (20) pour déformer élastiquement la patte (60).

9. Essuie-glace selon la revendication 8, **caractérisé en ce que** le verrou comporte une plaque de manipulation (46) qui s'étend perpendiculairement à l'axe d'articulation (A2) du verrou (40).

10. Essuie-glace selon la revendication 9, **caractérisé en ce que** la plaque de manipulation (46) comporte, à une extrémité libre, des moyens d'emboîtement élastiques (86) qui coopèrent avec des moyens complémentaires (84) du connecteur (20) pour maintenir le verrou en position de verrouillage.

11. Essuie-glace selon l'une quelconque des revendications précédentes, **caractérisé en ce que** le verrou comporte une partie (70) qui, lorsque le verrou (40) arrive en position de déverrouillage, coopère avec le balai (12) de manière à provoquer un détachement du connecteur (20) par rapport au balai (12).

## Patentansprüche

1. Kraftfahrzeugscheibenwischer, in dem ein Scheibenwischblatt (12) an einem länglichen Ende (16) eines Scheibenwischerarms (18) über ein Verbindungsstück (20) artikuliert ist, das auf dem Arm (18) artikuliert ist und das auf einem Verbindungsabschnitt (10) des Scheibenwischblattes (12) befestigt ist, wobei der Verbindungsabschnitt (10) ein transversales Element (44, 72) umfasst, wobei der Scheibenwischer (12) einen vom Verbindungsstück getragenen mobilen Riegel (40) umfasst, wobei der Riegel auf dem Verbindungsstück (40) zwischen einer Verriegelungsposition und einer Entriegelungsposition mobil angebracht ist, wobei der mobile Riegel (40) zum Zusammenwirken mit dem transversalen Element (44, 72) über ein zum Eingreifen mit dem transversalen Element in Verriegelungsposition bestimmtes Verhakungsmittel bestimmt ist, **dadurch gekennzeichnet, dass** der Übergang von einer Position zur anderen durch Schwenken des mobilen Riegels (40) um seine Artikulationsachse (A2) auf dem Verbindungsstück (20) erreicht wird.

2. Scheibenwischer gemäß Anspruch 1, **dadurch gekennzeichnet, dass** der Riegel (40) auf dem Verbindungsstück (20) um eine transversale Achse (A2) artikuliert ist.

3. Scheibenwischer gemäß einem der vorherigen Ansprüche, **dadurch gekennzeichnet, dass** das Verbindungsstück (20) auf dem Verbindungsabschnitt (10) des Scheibenwischblattes (12) nach unten stützend aufliegt, und dass der Riegel (40) mit einer unteren Seite (82) des transversalen Elements (44, 72) zusammenwirkt.

4. Scheibenwischer gemäß einem der vorherigen Ansprüche, **dadurch gekennzeichnet, dass** der Riegel (40) eine Verhakungsklaue (50) umfasst, die zwischen den Flügeln (14) des Wischblattes (12) aufgenommen wird, das in Verriegelungsposition mit dem transversalen Element (44, 72,) zusammenarbeitet und das in Entriegelungsposition in Längsrichtung im Verhältnis zum transversalen Element freigelegt ist.

5. Scheibenwischer gemäß einem der vorherigen Ansprüche, **dadurch gekennzeichnet, dass** das transversale Element durch ein Plattenelement (72) gebildet wird, das sich zwischen den beiden Flügeln (14) erstreckt und das mit einem Längsschlitz (78) versehen ist, der in einen transversalen vorderen Rand (80) des Plattenelements (72) mündet, dass die Verhakungsklaue (50) sich in Entriegelungsposition des Riegels (40) gegenüber vom Schlitz (78) erstreckt und dass die Verhakungsklaue (50) in Verriegelungsposition aufstützend gegen eine Anschlagseite (82) des Plattenelements (72) zusammenwirkt, das in Längsrichtung hinter dem Schlitz (78) angeordnet ist.

6. Scheibenwischer gemäß einem der vorherigen Ansprüche, **dadurch gekennzeichnet, dass** der Riegel (40) Anschlagmittel (62, 66) umfasst, die seine Verriegelungs- und Entriegelungsposition im Verhältnis zum Verbindungsstück (20) bestimmen.

7. Scheibenwischer gemäß einem der vorherigen Ansprüche, **dadurch gekennzeichnet, dass** der Riegel (40) elastische Mittel (60, 62) umfasst, die ihn zu der einen oder der anderen seiner Verriegelungs- und Entriegelungspositionen hin zwingen.

8. Scheibenwischer gemäß einem der vorherigen Ansprüche, **dadurch gekennzeichnet, dass** der Riegel (40) eine elastische Klaue (60) umfasst, die sich deutlich im Kreisbogen um die Artikulationsachse (A2) des Riegels (40) erstreckt und die eine Nockenfläche (62) umfasst, die mit einer festen Fläche (64) des Verbindungsstücks (20) zusammenwirkt, um die Klaue (60) elastisch zu verformen, wenn der Riegel (40) zwischen seinen Verriegelungs- und Entriegelungspositionen ist.

9. Scheibenwischer gemäß Anspruch 8, **dadurch gekennzeichnet, dass** der Riegel eine Handhabungsplatte (46) umfasst, die sich senkrecht zur Artikulationsachse (A2) des Riegels (40) erstreckt.

10. Scheibenwischer gemäß Anspruch 9, **dadurch gekennzeichnet, dass** die Handhabungsplatte (46) an einem freien Ende elastische Einfügungsmittel (86) umfasst, die mit komplementären Mitteln (84) des verbindungsstücks (20) zusammenwirken, um den Riegel in der Verriegelungsposition zu halten.

11. Scheibenwischer gemäß einem der vorherigen Ansprüche, **dadurch gekennzeichnet, dass** der Riegel einen Teil (70) umfasst, der mit dem Wischblatt (12) derart zusammenwirkt, dass, wenn der Riegel (40) in der Entriegelungsposition ankommt, ein Loslösen des Verbindungsstücks (20) im Verhältnis zum Wischblatt (12) hervorgerufen wird.

## Claims

1. A motor vehicle wiper in which a wiper blade (12) is articulated at a longitudinal end (16) of a wiper arm (18) by means of a connector (20) which is articulated on the arm (18) and which is fixed to a connecting portion (10) of the blade (12), the connecting portion (10) comprising a transverse element (44, 72), the wiper (12) comprising a movable lock (40) carried by the connector, the lock being mounted so as to move on the connector (40) between a locking position and an unlocking position, the movable lock (40) being intended to cooperate with the transverse element (44, 72) by means of an attachment means intended to engage with the transverse element in the locking position, **characterised in that** the passage from one position to the other is obtained by pivoting of the movable lock (40) about its articulation axis (A2) on the connector (20).

2. A wiper according to Claim 1, **characterised in that** the lock (40) is articulated on the connector (20) about a transverse axis (A2).

3. A wiper according to any one of the preceding claims, **characterised in that** the connector (20) is in downward abutment on the connecting portion (10) of the blade (12), and **in that** the lock (40) cooperates with a bottom face (82) of the transverse element (44, 72).

4. A wiper according to any one of the preceding claims, **characterised in that** the lock (40) comprises an attachment lug (50) which is received between the flanges (14) of the blade (12) which, in the locking position, cooperates with the transverse element (44, 72) and which, in the unlocking position, is disengaged longitudinally with respect to the transverse element (44, 72).

5. A wiper according to any one of the preceding claims, **characterised in that** the transverse element is formed by a plate element (72) which extends between the two flanges (14) and which is provided with a longitudinal slot (78) which opens out in a front transverse edge (80) of the plate element (72), **in that** in the unlocked position of the lock (40), the attachment lug (50) extends opposite the slot (78) and **in that**, in the locking position, the attachment lug (50) cooperates in abutment against a stop face (82) of the plate element (72) which is arranged longitudinally behind the slot (78).

6. A wiper according to any one of the preceding claims, **characterised in that** the lock (40) comprises stop means (62, 66) which determine its locking and unlocking positions with respect to the connector (20).

7. A wiper according to any one of the preceding claims, **characterised in that** the lock (40) comprises elastic means (60, 62) which force it towards one or other of its locking or unlocking positions.

8. A wiper according to any one of the preceding claims, **characterised in that** the lock (40) comprises an elastic lug (60) which extends substantially in an arc of a circle about the articulation axis (A2) of the lock (40) and which comprises a cam surface (62) which, when the lock (40) is between its locking and unlocking positions, cooperates with a fixed surface (64) of the connector (20) in order to elastically deform the lug (60).

9. A wiper according to Claim 8, **characterised in that** the lock comprises a manipulation plate (46) which extends perpendicular to the articulation axis (A2) of the lock (40).

10. A wiper according to Claim 9, **characterised in that** the manipulation plate (46) comprises, at a free end, elastic fitting-in means (86) which cooperate with complementary means (84) of the connector (20) in order to hold the lock in the locking position.

11. A wiper according to any one of the preceding claims, **characterised in that** the lock comprises a part (70) which, when the lock (40) arrives in the unlocked position, cooperates with the blade (12) so as to cause a detachment of the connector (20) with respect to the blade (12).
